# EUROPEAN PATENT SPECIFICATION

(11) **EP 0 255 155 B1**
(45) Date of publication and mention of the grant of the patent: **07.01.1993**
(21) Application number: 87201103.6
(22) Date of filing: 11.06.1987
(51) Int. Cl.: A01C 7/08, A01C 15/00, A01B 73/00

(54) **A seed drill**
Sämaschine
Semoir

(30) Priority: 13.06.1986 NL 8601529
(43) Date of publication of application: 03.02.1988
(60) Divisional application: 92201719.9
(73) Proprietor: C. van der Lely N.V., NL-3155 PD Maasland (NL)
(72) Inventor: van der Lely, Ary, Maasland (NL); Bom, Cornelis J. G., Rozenburg (NL)
(74) Representative: Mulder, Herman

(56) References cited:
- DE-A- 2 447 982
- FR-A- 1 554 609
- FR-A- 2 375 813
- GB-A- 752 161

## Description

The invention concerns a seed drill comprising a hopper for seed material, means for conveing said seed material from the hopper to drill coulters and a frame having connecting means for coupling said seed drill to a tractor or to another agricultural machine, the seed drill is provided on both sides with supporting wheels mounted to the frame to support the seed drill during operation.

A seed drill of this kind is known from the FR-A-2 375 813.

Seed drills of the known type are generally of a wide construction, so that they can provide a wide strip of soil with seed material in a single run. The invention contemplates to provide an efficient construction of such a seed drill, as will appear from the description.

According to the invention, the supporting wheels are mounted to the frame by pivot means located more centrally in the drill than the respective planes of the supporting wheels in the operational position so that the wheels are capable of being hinged upwardly to a more central position in the seed drill for transportation of the machine. The application of supporting wheels at the outer sides may be advantageous in connection with the stability and in view of the space available or to prevent wheel tracks in unwanted areas. By so constructing the supporting wheels that they are capable of being hinged upwardly to a more central position in the seed drill, the total width thereof can be restricted, which e.g. may be of importance when it is moved by road.

According to a further feature of the invention, each supporting wheel is rotatably fastened to a support, which support is mounted by the pivot means to the frame, the pivot means comprises a pivot axis preferably being arranged substantially parallel to the plane of the supporting wheel. Preferably, the pivot axis may be located above the axis of rotation of the supporting wheel, i.e. the said axes are crossing at some distance from each other.

According to a still further feature of the invention, there may be present locking means for locking the supporting wheels in the operative position or in the hinged-upward position.

Also, there may be present means for erasing the track caused by the supporting wheel, which means in accordance with a still further feature of the invention may be capable of being hinged upwardly, for which purpose they may be mounted on the support also carrying the supporting wheel. The said means may consist of one or more downwardly directed tines.

With the object of improving the spreading of the weight over the entire seed drill combination, i.e. seed drill, tractor and any further agricultural implements, the seed drill may be provided with a hopper disposed separate from the storage bin and coupled with the storage bin by means for conveying the seed material from said hopper to the small storage bin, the hopper having connecting means for coupling said hopper to the said tractor or other agricultural machine. The said means may consist of a fan and an air transport pipe. In accordance with a still further feature of the invention, there may be included means for detecting the quantity of seed material in the small storage bin, it then being possible to control the flow of seed material to this bin on the basis of said detection. This control can be effected either automatically or by hand.

The invention furthermore relates to a seed drill combination, comprising the seed drill and a further agricultural machine, e.g. a power-driven rotary harrow, wherein the seed drill is connected to said further agricultural machine. In a further embodiment of a suchlike combination a relative movement in upward direction of the seed drill with respect to the said device is possible, and the hopper being located at least partly above the soil cultivation device, said device being provided with drive means connectable to the tractor, pneumatic means being provided to convey material from the hopper to the coulters, the pneumatic means being driven by a drive shaft connecting the drive means of the soil cultivation device with a blower for the pneumatic means.

A favourable construction to connect the seed drill in a good operable position to the tractor may be obtained when the frame to which the ground wheels are mounted being provided with an intermediate trestle, said trestle having connecting means for coupling to a tractor.

For a better understanding of the invention and to show how the same may be carried into effect, some embodiments of a seed drill will now be described with reference to the accompanying drawings, in which:
Figure 1 is a side view of a seed drill coupled to a tractor;
Figure 2 is a side view of the seed drill in the non-operative position;
Figure 3 is a rear view of the seed drill in the non-operative position;
Figure 4 is a side view of part of the seed drill of Figures 1, 2 and 3;
Figure 5 is a plan view of the part of the seed drill shown in Figure 4;
Figure 6 is a plan view in accordance with that of Figure 5;
Figure 7 is a side view of a seed drill combination coupled to a tractor;
Figure 8 is a side view of a tractor with seed drill, and
Figure 9 is a view of a detail taken in the direction of the arrow IX in Figure 8.

In the drawings, which are only a schematical illustration of the embodiments, corresponding parts are denoted by the same reference numerals.

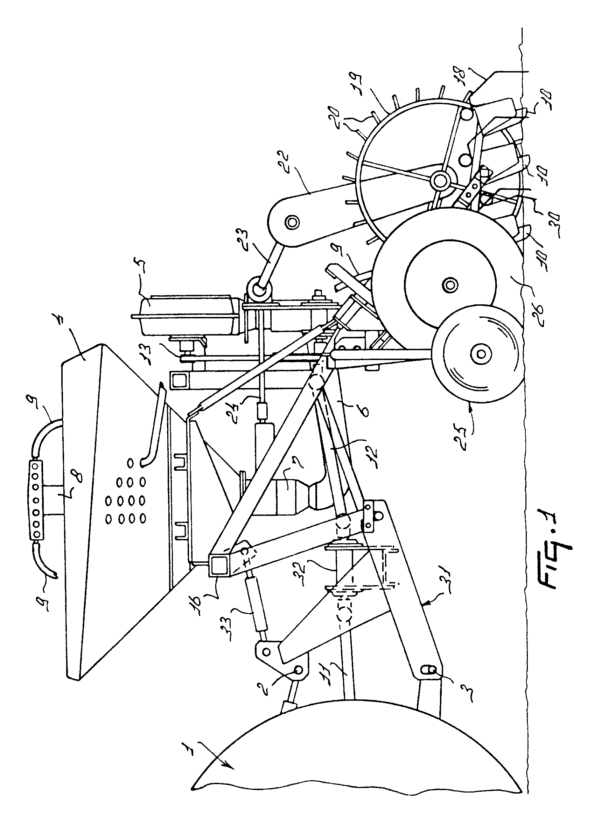

Figure 1 shows a tractor 1 of which only the rear side is shown, which tractor includes a three-point lifting hitch comprising an upper coupling member 2 and two lower coupling members 3, to which members the seed drill is connected.

The seed drill includes a hopper 4 in which the seed material may be contained. Air is blown to the doser 7 via the air duct 6 by means of a fan 5, whereafter the seed-air mixture is conveyed via channel 8 and the seed tubes 9 to the drill coulters 10. The fan 5 is driven by the power take-off shaft of the tractor 1 via the intermediate shafts 11 and 12 and the belt transmission 13.

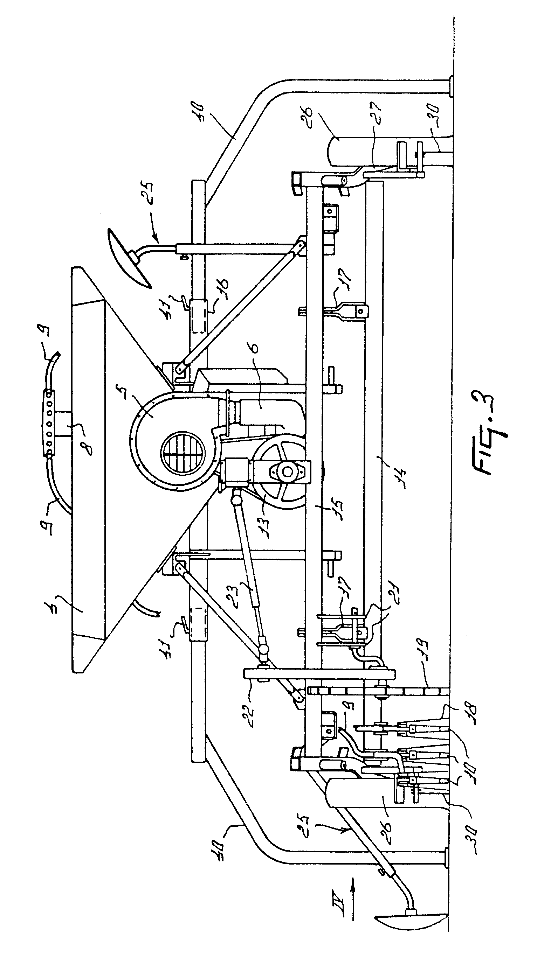

The hopper 4 is supported in a frame, the beams 14, 15 and 16 of which extend transversely. As is apparent from Figure 3, the drill coulters 10 are mounted on beam 14, which beam 14 is connected to beam 15 by means of supports 17. The drill coulters 10 are provided over the entire length of beam 14, although Figure 3 shows only a few thereof. The drill coulters 10 are provided with seed material via seed tubes 9, which are only shown in part, which drill coulters are furthermore fitted with spring-loaded tines 18 for smoothing the soil.

The drive of doser 7 includes a running wheel 19 comprising soil-engaging spikes 20, by means of which the running wheel 19 rotates in dependence on the forward motion of the seed drill. The running wheel 19 is connected to beam 15 of the frame via the supports 21. The rotary motion of running wheel 19 is transferred to the doser 7 by means of a chain transmission 22 and drive rods 23 and 24. By means of this drive the doser 7 conveys seed material to the air stream generated by the fan 5, the quantity of seed material depending on the rate of travel of the seed drill.

In addition, the seed drill is provided at both sides with a marker 25, which can be hinged downwardly or upwardly depending on the needs, as is shown in Figure 3.

Furthermore, the seed drill is provided at both sides with a supporting wheel 26, by means of which the seed drill can bear on the soil during operation. As is apparent from Figure 3, the supporting wheels 26 constitute the outermost parts of the seed drill. Consequently, it is possible, during transportation, to restrict the total width of the seed drill by folding up said supporting wheels 26. During transportation, the supporting wheels 26 do not serve any purpose, as the seed drill is then supported by the three-point lifting hitch of the tractor only.

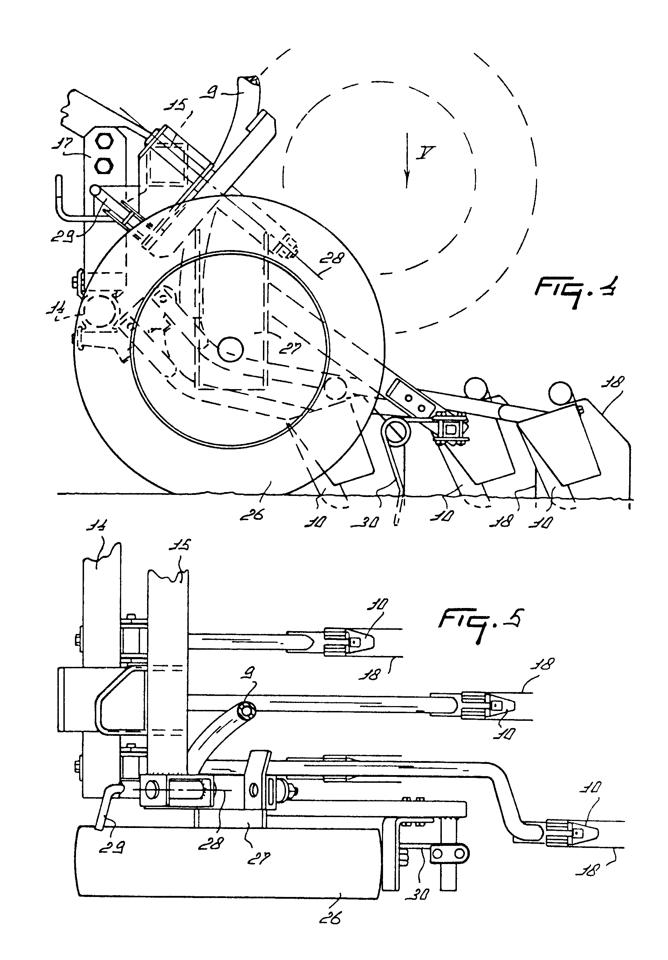

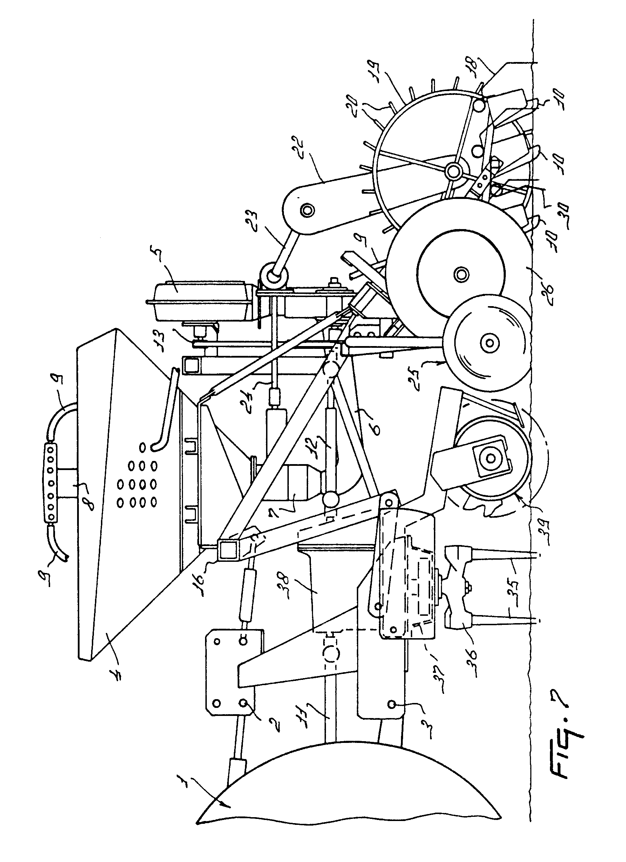

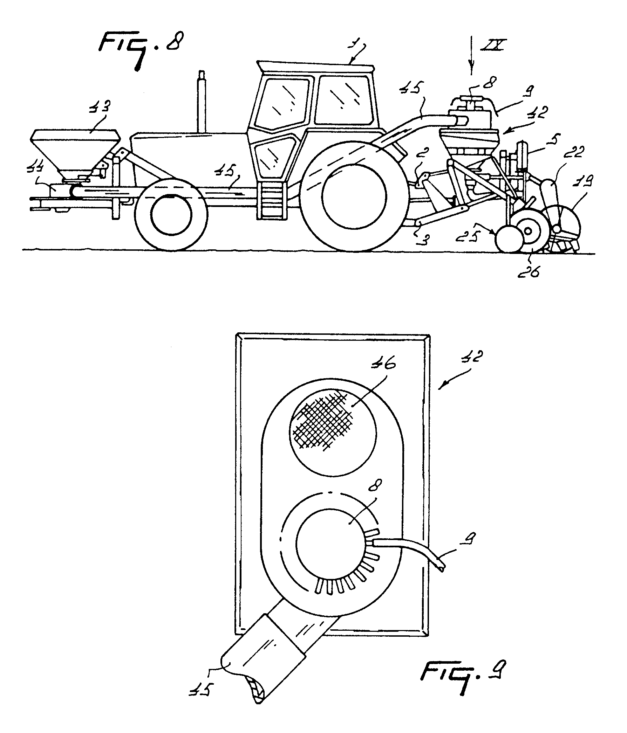

In order to allow the supporting wheels 26 to hinge upwardly, the support 27 of each supporting wheel 26 is pivotable about a pivot axis 28 indicated in Figure 4 by a dash-and-dot line. The hinged-up position of supporting wheel 26 is denoted in Figure 4 by means of a broken line. The supporting wheel 26 can be locked in the operative position or in the hinged-up position by means of a locking pin 29. Since the pivot axis 28 extends obliquely forwardly, is provided spaced above the centre line of the non-hinged up supporting wheel 26 and is located at the inner side thereof, said supporting wheel can be hinged upwardly to an advantageous position within the seed drill width. The tines 30 arranged behind the supporting wheel 26 for deleting the tyre track are fitted to the support 27, so that said tines 30 can be hinged upwardly along with the supporting wheel.

Figure 1 shows a seed drill which is connected to the three-point lifting hitch 2, 3 of the tractor 1 via an intermediate trestle 31. The intermediate trestle 31 has an intermediate bearing 32, on both sides of which an intermediate shaft 11, 12 can be coupled. The position of the seed drill can be set by means of a threaded spindle 33 of said intermediate trestle.

When the seed drill forms part of a seed drill combination as shown in Figure 7, a soil cultivating machine, e.g. a power-driven rotary harrow, may be substituted for said intermediate trestle 31. The rotary harrow shown in Figure 7 comprises a plurality of adjacent tines 35 which rotate about vertical axes and whose carriers 36 are bearing-supported in a housing 37 accommodating the tine drive. As is apparent from the drawing, the gear transmission box 38 of the rotary harrow is driven by intermediate shaft 11, whilst the intermediate shaft 12 is coupled to an outgoing shaft of the gear transmission box 38. In addition, Figure 7 shows a packer roller 39 which conditions the soil cultivated by the harrow tines 35.

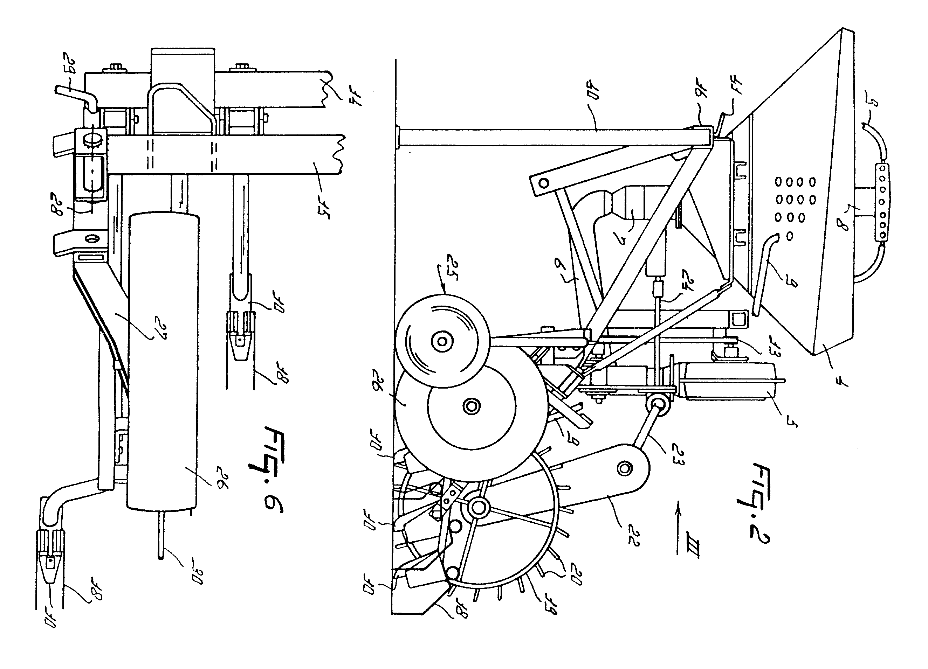

Figure 2 shows the seed drill in its resting position, that is to say the position the seed drill may be in when it is not coupled to the tractor. In said resting position the seed drill is kept in the appropriate position because it bears on the supporting wheels 26 and on supporting pillars 40, one end of which can be inserted into the beam 16 and the other end can bear on the soil. The supporting pillars 40 can be locked in the beam 16 by means of the locking pins 41.

In the embodiment shown in the Figures 8 and 9, a tractor is provided at its rear side with a seed drill as shown in Figure 1, the hopper being replaced, however, by a smaller storage bin 42. The large hopper 43 is disposed at the front side of the tractor, which results in an improved weight distribution. The hopper 43 has a, for example, hydraulically driven fan 44. Fan 44 can produce an air stream capable of conveying the seed material from the hopper 43 to the storage bin 42 via seed pipe 45. Figure 9 is a plan view of the storage bin 42, in which figure reference numeral 46 denotes a filter through which the air supplied via the pipe 45 can flow away. The seed material then stays behind in the storage bin 42, to be fed from there to the drill coulters via channel 8 and seed tubes 9.

The supply of seed material from hopper 43 to storage bin 42 may be a continuous process. Alternatively, it is possible to switch on the supply of seed material each time when the amount thereof in the storage bin 42 has decreased to below a specific level. To that end the storage bin 42 may be provided with a level detector.

## Claims

1. A seed drill comprising a hopper (4) for seed material, means (5, 8, 9) for conveying said seed material from the hopper (4) to drill coulters (10), and a frame (14, 15, 16) having connecting means for coupling said seed drill to a tractor or to another agricultural machine, the seed drill is provided on both sides with supporting wheels (26) mounted to the frame to support the seed drill during operation, characterized in that the supporting wheels (26) are mounted to the frame (14, 15, 16) by pivot means (28) located more centrally in the drill than the respective planes of the supporting wheels in the operational position so that the wheels (26) are capable of being hinged upwardly to a more central position in the seed drill for transportation of the machine.

2. A seed drill as claimed in claim 1, characterized in that each supporting wheel (26) is rotatably fastened to a support (27), which support is mounted by the pivot means (28) to the frame, the pivot means comprise a pivot axis (28) which is substantially parallel to the plane of the supporting wheel in the operational position and which is located above the axis of rotation of the supporting wheel (26) in the operational position.

3. A seed drill as claimed in any one of the preceding claims, characterized by locking means (29) for locking the supporting wheel (26) in the operative position and in the hinged-up position.

4. A seed drill as claimed in claim 2 or claims 2 and 3, characterized in that means (30) for erasing the track caused by the supporting wheel (26) are mounted on the support and are hingeable upwardly together with the supporting wheel.

5. A seed drill as claimed in any one of the preceding claims, characterized in that the seed drill is provided with a small storage bin (42) and that means (45) are present for feeding, during operation, seed material to said small storage bin.

6. A seed drill as claimed in claim 5, characterized in that the seed drill is provided with a hopper (43) disposed separate from the storage bin (42) and coupled with the storage bin (42) by means (44, 45) for conveying the seed material from said hopper to the small storage bin, the hopper having connecting means for coupling said hopper to the said tractor or other agricultural machine for which the seed drill is coupable with the connecting means provided on the frame.

7. A seed drill as claimed in claim 5 or 6, characterized in that the means consist of a fan (44) and an air transport pipe (45).

8. A seed drill as claimed in any one of claims 5 to 7, characterized by means for detecting the quantity of seed material in the small storage bin (42), it being possible to control the supply of seed material on the basis of said detection.

9. A seed drill as claimed in any one of the preceding claims, characterized in that the frame having the ground wheels mounted thereon being provided with an intermediate trestle (31), said trestle having connecting means for coupling to the tractor.

10. A seed drill as claimed in claim 9, characterized in that one side of the trestle (31) is provided with three connection devices for coupling to the standard three-point lifting hitch (2, 3) of a tractor (11) and the other side is provided with two lower connection devices for connection to the said frame (14, 15, 16) and one higher connection device for connection to an adjustable coupling means (33) coupled with the frame, so that the trestle (31) can be fixed to the frame (14, 15, 16) in a predetermined position.

11. A seed drill as claimed in claim 10, characterized in that an intermediate shaft being rotatable mounted in a bearing (32) provided in the trestle (31), one end of the said intermediate shaft being connectable to a shaft (11) leading to the P.T.O. of a tractor, the other end of the said intermediate shaft being connectable to a second shaft (12) leading to the means for conveying the seed material, so that the means for conveying are driven by the P.T.O. through the first shaft, the intermediate shaft and the second shaft.

12. A seed drill combination comprising a seed drill as claimed in any one of the preceding claims and a further agricultural machine, e.g. a power-driven rotary harrow (35, 36, 37, 38, 39), wherein the seed drill is connected to said further agricultural machine.

13. A seed drill combination as claimed in claim 12 comprising a soil cultivation device (35, 36, 37, 38, 39) wherein the seed drill is connected to the device so that relative movement in upward direction of the seed drill with respect to the said device is possible, and wherein the hopper (4) being located at least partly above the soil cultivation device, said device being provided with drive means connectable to the tractor, pneumatic means being provided to convey material from the hopper to the coulters, the pneumatic means being driven by a drive shaft connecting the drive means of the soil cultivation device with a blower for the pneumatic means.

## Patentansprüche

1. Drillsaatmaschine mit einem Vorratsbehälter (4) für Saatgut, einer Vorrichtung (5, 8, 9) zum Transport des Saatgutes vom Vorratsbehälter (4) zu Drillscharen (10) und einem Gestell (14, 15, 16) mit Anschlußvorrichtungen zum Anschließen der Drillsaatmaschine an einen Schlepper oder an eine andere Landmaschine, wobei die Drillsaatmaschine an beiden Seiten mit Laufrädern (26) versehen ist, die mit dem Gestell verbunden sind und die die Drillsaatmaschine im Betrieb abstützen,
dadurch gekennzeichnet, daß die Laufräder (26) mit dem Gestell (14, 15, 16) mittels einer Schwenkvorrichtung (28) verbunden sind, welche näher zur Mitte in der Drillsaatmaschine angeordnet ist als die jeweiligen Ebenen der Laufräder in Betriebsstellung, so daß die Laufräder (26) beim Transport der Maschine nach oben in eine Position näher zur Mitte der Drillsaatmaschine geklappt werden können.

2. Drillsaatmaschine nach Anspruch 1,
dadurch gekennzeichnet, daß jedes Laufrad (26) drehbar an einer Stütze (27) angeordnet ist, welche mittels der Schwenkvorrichtung (28) mit dem Gestell verbunden ist, wobei die Schwenkvorrichtung eine Schwenkachse (28) aufweist, die in Betriebsstellung im wesentlichen parallel zur Ebene des Laufrades und über der Drehachse des Laufrades (26) angeordnet ist.

3. Drillsaatmaschine nach einem der vorhergehenden Ansprüche,
dadurch gekennzeichnet, daß eine Verriegelungsvorrichtung (29) zum Verriegeln des Laufrades (26) in Betriebsstellung und in der hochgeklappten Stellung vorgesehen ist.

4. Drillsaatmaschine nach Anspruch 2 oder den Ansprüchen 2 und 3,
dadurch gekennzeichnet, daß zum Beseitigen der durch das Laufrad (26) entstandenen Spur Einrichtungen (30) an der Stütze vorgesehen sind, die zusammen mit dem Laufrad hochschwenkbar sind.

5. Drillsaatmaschine nach einem der vorhergehenden Ansprüche,
dadurch gekennzeichnet, daß die Drillsaatmaschine mit einem kleinen Speicherbehälter (42) und einer Vorrichtung (45) zum Zuführen des Saatgutes während des Betriebes an den kleinen Speicherbehälter versehen ist.

6. Drillsaatmaschine nach Anspruch 5,
dadurch gekennzeichnet, daß die Drillsaatmaschine mit einem Vorratsbehälter (43) versehen ist, der getrennt vom Speicherbehälter (42) angeordnet und mit dem Speicherbehälter (42) durch Vorrichtungen (44, 45) zum Zuführen des Saatgutes vom Vorratsbehälter an den kleinen Speicherbehälter verbunden ist, wobei der Vorratsbehälter mit Anschlußvorrichtungen zum Anschließen des Vorratsbehälters an den Schlepper oder eine andere Landmaschine versehen ist, an welche die Drillsaatmaschine mittels der am Gestell vorgesehenen Anschlußvorrichtungen anzuschließen ist.

7. Drillsaatmaschine nach Anspruch 5 oder 6,
dadurch gekennzeichnet, daß die Vorrichtungen aus einem Gebläse (44) und einer Luftförderleitung (45) bestehen.

8. Drillsaatmaschine nach einem der Ansprüche 5 bis 7,
dadurch gekennzeichnet, daß der kleine Speicherbehälter (42) mit Vorrichtungen zum Ermitteln der Saatgutmenge versehen ist, so daß aufgrund dieser Messung die Saatgutzufuhr steuerbar ist.

9. Drillsaatmaschine nach einem der vorhergehenden Ansprüche,
dadurch gekennzeichnet, daß das mit den Bodenrädern versehene Gestell einen Zwischen-Anbaubock (31) aufweist, welcher mit Anschlußvorrichtungen zum Anschließen an den Schlepper versehen ist.

10. Drillsaatmaschine nach Anspruch 9,
dadurch gekennzeichnet, daß eine Seite des Anbaubocks (31) mit einem Dreipunkt-Anschluß zum Anschließen an die Standard-Dreipunkt-Hebevorrichtung (2, 3) eines Schleppers (11) versehen ist und die andere Seite mit zwei unteren Anschlußvorrichtungen zum Anschluß an das Gestell (14, 15, 16) sowie einer oberen Anschlußvorrichtung zum Anschluß an eine verstellbare Anschlußvorrichtung (33), welche mit dem Gestell verbunden ist, so daß der Anbaubock (31) in einer vorgegebenen Position an dem Gestell (14, 15, 16) zu befestigen ist.

11. Drillsaatmaschine nach Anspruch 10,
dadurch gekennzeichnet, daß eine Zwischenwelle in einem in dem Anbaubock (31) vorgesehenen Lager (32) gelagert ist, wobei das eine Ende der Zwischenwelle mit einer Welle (11) zu verbinden ist, welche zum Zapfwellenanschluß eines Schleppers führt, und wobei das andere Ende der Zwischenwelle an eine zweite Welle (12) anzuschließen ist, welche zur Zuführvorrichtung für das Saatgut führt, so daß die Zuführvorrichtung von dem Zapfwellenanschluß über die erste Welle, die Zwischenwelle und die zweite Welle angetrieben wird.

12. Drillsaatmaschinen-Kombination, die eine Drillsaatmaschine nach einem der vorhergehenden Ansprüche und eine weitere Landmaschine aufweist, z. B. eine angetriebene Kreiselegge (35, 36, 37, 38, 39), wobei die Drillsaatmaschine an diese weitere Landmaschine angeschlossen ist.

13. Drillsaatmaschinen-Kombination nach Anspruch 12 mit einem Bodenbearbeitungsgerät (35, 36, 37, 38, 39), bei der die Drillsaatmaschine an das Gerät derart angeschlossen ist, daß eine relative Bewegung der Drillsaatmaschine nach oben in Bezug auf das Gerät möglich ist, und bei der der Vorratsbehälter (4) zumindest teilweise über dem Bodenbearbeitungsgerät angeordnet ist, das mit einem an den Schlepper anschließbaren Getriebe versehen ist, sowie mit einer pneumatischen Vorrichtung zum Transport des Saatgutes vom Vorratsbehälter zu den Scharen, wobei die pneumatische Vorrichtung von einer Antriebswelle angetrieben wird, die die Antriebsvorrichtung des Bodenbearbeitungsgeräts mit einem Gebläse für die pneumatische Vorrichtung verbindet.

## Revendications

1. Semoir comprenant une trémie (4) pour la matière à semer, des moyens (5, 8, 9) pour transporter ladit matière à semer de la trémie (4) vers des coutres (10) de semoir, et un châssis (14, 15, 16) ayant des moyens de liaison pour atteler ledit semoir à un tracteur ou à une autre machine agricole, le semoir étant muni sur ses deux côtés de roues porteuses (26) montées sur le châssis pour supporter le semoir au cours du travail,
**caractérisé** en ce que les roues porteuses (26) sont montées sur le châssis (14, 15, 16) par des moyens à pivots (28) situés dans le semoir en position plus centrale que les plans respectifs des roues porteuses en position de travail, de telle sorte que les roues (26) sont capables d'être articulées vers le haut, vers une position plus centrale dans le semoir, pour le transport de la machine.

2. Semoir selon la revendication 1, caractérisé en ce que chaque roue porteuse (26) est fixée, en pouvant tourner, à un support (27), lequel support est monté sur le châssis par les moyens à pivots, les moyens à pivots comprenant un axe de pivotement (28) qui est sensiblement parallèle au plan des roues porteuses en position de travail, et qui est situé au dessus de l'axe de rotation de la roue porteuse (26) en position de travail.

3. Semoir selon l'une quelconque des revendications précédentes, caractérisé par des moyens de verrouillage (29) pour verrouiller la roue porteuse (26) en position de travail et en position relevée.

4. Semoir selon la revendication 2 ou selon les revendications 2 et 3, caractérisé en ce que des moyens (30) pour effacer la trace provoquée par la roue porteuse (26) sont montés sur le support et peuvent pivoter vers le haut, ensemble avec la roue porteuse.

5. Semoir selon l'une quelconque des revendications précédentes, caractérisé en ce que le semoir est muni d'un petit coffre de stockage (42) et en ce que des moyens (45) sont présents pour débiter, au cours du travail, de la matière à semer audit petit coffre de stockage.

6. Semoir selon la revendication 5, caractérisé en ce que le semoir est muni d'une trémie (43) disposée séparément du coffre de stockage (42) et reliée au coffre de stockage (42) par des moyens (44, 45) pour transporter la matière à semer de ladite trémie vers le petit coffre de stockage, la trémie ayant des moyens de liaison pour coupler ladite trémie audit tracteur ou autre machine, ce pour quoi le semoir peut être couplé aux moyens de liaison prévus sur le châssis.

7. Semoir selon la revendication 5 ou 6, caractérisé en ce que les moyens consistent en un ventilateur (44) et un tuyau (45) de transport pneumatique.

8. Semoir selon l'une quelconque des revendications 5 à 7, caractérisé par des moyens pour détecter la quantité de matière à semer dans le petit coffre de stockage (42), l'apport de matière à semer pouvant être commandé d'après ladite détection.

9. Semoir selon l'une quelconque des revendications précédentes, caractérisé en ce que le châssis sur lequel sont montées les roues porteuses est muni d'un chevalet intermédiaire (31), ledit chevalet ayant des moyens de liaison pour l'attelage au tracteur.

10. Semoir selon la revendication 9, caractérisé en ce qu'un côté du chevalet (31) est muni de trois dispositifs de liaison pour l'attelage au dispositif d'attelage/levage à trois points (2, 3) de type classique d'un tracteur (11) et en ce que l'autre côté est muni de deux dispositifs de liaison inférieurs pour la liaison avec ledit châssis (14, 15, 16) et un dispositif de liaison supérieur pour la liaison avec un moyen d'accouplement réglable (33) couplé au châssis, de telle sorte que le chevalet (31) puisse être fixé au châssis (14, 15, 16) en une position prédéterminée.

11. Semoir selon la revendication 10, caractérisé en ce qu'un arbre intermédiaire est monté rotatif dans un palier (32) prévu dans le chevalet (31), une extrémité dudit arbre intermédiaire pouvant être reliée à un arbre (11) allant à l'arbre de prise de force d'un tracteur, l'autre extrémité dudit arbre intermédiaire pouvant être reliée à un deuxième arbre (12) allant aux moyens de transport de la matière à semer, de telle sorte que les moyens de transport sont entraînés par l'arbre de prise de force à travers le premier arbre, l'arbre intermédiaire et le deuxième arbre.

12. Combinaison à semoir comprenant un semoir tel que revendiqué dans l'une quelconque des revendications précédentes et une autre machine agricole, par exemple une herse rotative motorisée (35, 36, 37, 38, 39), dans laquelle le semoir est relié à ladite autre machine agricole.

13. Combinaison à semoir selon la revendication 12, comprenant un dispositif de culture du sol (35, 36, 37, 38, 39), dans laquelle le semoir est relié au dispositif de telle sorte que soit possible le mouvement relatif du semoir vers le haut, par rapport audit dispositif, et dans laquelle la trémie (4) est située au moins partiellement au dessus du dispositif de culture du sol, ledit dispositif étant muni de moyens d'entraînement pouvant être reliés au tracteur, des moyens pneumatiques étant prévus pour transporter de la matière de la trémie jusqu'aux coutres, les moyens pneumatiques étant entraînés par un arbre d'entraînement reliant les moyens d'entraînement du dispositif de culture du sol à un ventilateur pour les moyens pneumatiques.
